# EUROPEAN PATENT APPLICATION

(11) **EP 1 202 423 A2**
(43) Date of publication of application: **02.05.2002**
(21) Application number: 01309080.8
(22) Date of filing: 25.10.2001
(51) Int. Cl.: H02H 9/02

(54) **Actuator drive circuit**

(30) Priority: 31.10.2000 US 699563
(71) Applicant: Hewlett-Packard Company, Palo Alto, CA 94304 (US)
(72) Inventor: Fischer, Michael C., Palo Alto, California 94303 (US)
(74) Representative: Powell, Stephen David

(57) **Abstract**

An actuator drive circuit (100) employs a current limiting device (115) with a strong positive temperature coefficient of resistance. The current limiting device allows large amounts of current to flow for a short period of time, prior to the actuator overheating by having the device's resistance rise and thus lowering the current flow to the actuator (120).

## Description

This invention relates to a circuit protection device for an actuator drive circuit. In particular, the invention relates to a current limiting device which allows large amounts of current to flow for short period of time and acts as a circuit overload protector.

Present circuit overload protectors set a low limit on the maximum current fed to an actuator. However, this limits the acceleration achievable by the actuator, thus making it slow to function. Examples of such actuators are voice coil motors, linear or rotary motors or any coil of wire in a magnetic field.

To achieve a fast response by the actuator, a large amount of current must be sent through the actuator for a short period of time. However, if the current were to persist for a long period of time, it would overheat the actuator and damage it.

One purpose of the present invention is to provide a current limiting device to the actuator drive circuit which allows large amounts of current to flow for a short period time, but before the actuator can overheat.

According to a first aspect, the invention comprises an actuator drive circuit comprising:
an actuator;
at least one current limiting device; and
a signal to allow current flow through the actuator drive circuit;
wherein during current flow, resistence of the current limiting device rises and current flow to the actuator is lowered.

According to a second aspect, the invention comprises a CD or DVD player including an electro dynamic actuator comprising wire coil means which is driven by an actuator drive circuit in accordance with the first aspect of the invention.

In arrangements according to the invention, an actuator drive circuit employs a current limiting device with a strong positive temperature coefficient of resistance. The current limiting device allows large amounts of current to flow for a short period of time, prior to the actuator overheating, by having the device's resistance rise and thus lowering the current flow.

Other features and advantages of the invention will be apparent from the accompanying drawing and the detailed description that follows.

The invention will be described with reference to the following drawing, wherein like numerals refer to like objects and wherein:

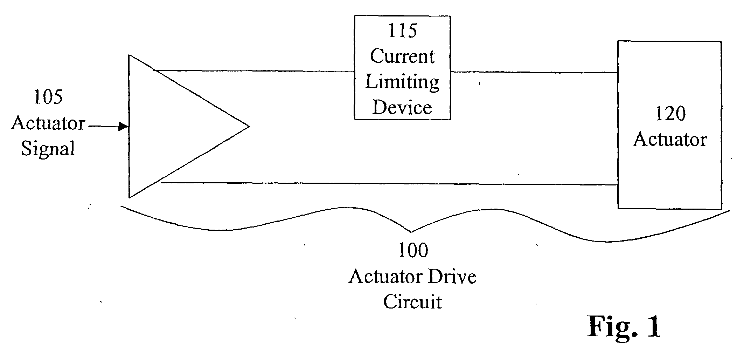

FIG. 1 is a schematic illustration of an actuator drive circuit employing a current limiting device according to the present invention.

Figure 1 is a schematic illustration of an actuator drive circuit 100 for a position tracking servo mechanism The actuator drive circuit 100 includes an actuator control signal 105, an amplifier 110, a current limiting device 115 and an actuator 120. In operation, the actuator control signal 105 is sent through the amplifier 110 to the actuator 120. The current limiting device 115 is electrically connected in series with the actuator 120. In the embodiment shown, the current limiting device 115 is an incandescent lamp.

A user can choose the characteristics of the filament in the lamp such that larger short duration currents that are needed to move the actuator 120 pass through the light bulb. A typical incandescent bulb filament has a rather large change in resistance between a cold state and the illuminated state. Although the filament warms up a small amount during the flow of the current, it passes essentially unimpeded by the resistence of the filament. However, if there was a problem or if the demands were high for some reason due to, for example, the motion of the actuator device, and the high current persisted too long, the filament of the current limiting device 115 would heat up more rapidly than the actuator's 120 coil that is being driven by this current. The lamp will absorb the energy and its resistence would increase and thus prevent the high current from existing for a longer period of time than would be safe for the actuator 120.

If the current were to persist for an extended period of time, it overheats the actuator 120 and burns up the coil of wire. However, by placing the current limiting device 115 or any other device with a strong positive temperature coefficient of resistence in series with the actuator 120, a larger amount of current flow is able to be used for a short period of time.

As as example, CD and DVD players contain electro dynamic actuators comprised of little coils of wire and magnets that move a lens such that a laser spot is tracked with extreme accuracy on the data to be read or written. In these systems there is a need to place large amounts of current through very small coils of wire. However, the current only needs to be placed for a short period of time since the coil of wire is not very heavy. Therefore, the actuator drive circuit 100 has to move very quickly. In order to move quickly, a short pulse of current is sent through the coil of wire that causes the necessary motion. In these applications the current limiting device 115 limits the amount of current sent to the actuator 120 to keep the coils in the actuator 120 from burning up. This is accomplished by the current limiting device's 115 resistance rising and thus lowering the current flow to the actuator 120.

The terms and descriptions used herein are set forth by way of illustration only and are not meant as limitations. In particular, although the invention has been described with reference to specific data structures, the invention may work equally well with variations of the data structure having more or less fields. Further, although the invention has been described with reference to specific ordered processing steps, the invention is operable with the steps performed in different orders or simultaneously. Those skilled in the art will recognize that these are other variations are possible within the scope of the invention as defined in the following claims.

## Claims

1. An actuator drive circuit (100) comprising:
an actuator (120);
at least one current limiting device (115); and
a signal (105) to allow current flow through the actuator drive circuit;
wherein during current flow, resistence of the current limiting device rises and current flow to the actuator is lowered.

2. The actuator drive circuit of claim 1 further comprising:
an amplifier.

3. The actuator drive circuit of claim 1 wherein the current limiting device (115) is electrically connected in series with the actuator (120).

4. The actuator drive circuit of claim 1 wherein the current limiting device (115) has a strong positive temperature coefficient of resistance.

5. The actuator drive circuit of claim 1 wherein there is a large current flow for a short duration of time.

6. The actuator drive circuit of claim 4 wherein the current limiting device (115) is a lamp.

7. A CD or DVD player including an electro dynamic actuator comprising wire coil means which is driven by an actuator drive circuit (100) in accordance with any preceding claim.
